# EUROPEAN PATENT SPECIFICATION

(11) **EP 4 426 127 B1**
(45) Date of publication and mention of the grant of the patent: **20.08.2025**
(21) Application number: 22793582.2
(22) Date of filing: 06.10.2022
(51) Int. Cl.: A23G 9/38, A23G 9/42, A23G 9/44, A23G 9/48, A23G 9/50

(54) **NOVEL FROZEN CONFECTION PRODUCT**
NEUES GEFRORENES KONFEKTPRODUKT
NOUVEAU PRODUIT DE CONFISERIE CONGELÉ

(30) Priority: 05.11.2021 EP 21206674
(43) Date of publication of application: 11.09.2024
(73) Proprietor: Unilever IP Holdings B.V., 3013 AL Rotterdam (NL)
(72) Inventor: NANDI, Asish, 6708 WH Wageningen (NL); ROSSETTI, Damiano, 6708 WH Wageningen (NL)
(74) Representative: Askew, Sarah Elizabeth
(86) International application number: PCT/EP2022/077855
(87) International publication number: WO 2023/078631

(56) References cited:
- EP-A1- 0 044 689
- EP-A1- 2 095 721
- WO-A1-2011/061121
- WO-A1-2017/001266
- WO-A1-2021/063871
- WO-A1-2021/140188
- US-A- 4 504 511
- US-A1- 2014 134 300
- US-A1- 2019 166 876
- US-A1- 2020 178 556

## Description

### Field of the Invention

The present invention relates to a frozen confection product comprising a core and a coating.

### Background of the Invention

Frozen confection products that comprise more than one component, e.g. more than one frozen confection, may be known as composite products. Composite products comprise multiple components, including more than one frozen confection. Such products include the TWISTER (Unilever) product. The TWISTER product comprises a cylindrical core of frozen confection and additional frozen confections positioned about the core in a spiral formation. Products that comprise more than one frozen confection composition are designed so that the physical characteristics of each frozen confection contrasts with others present. For example, the frozen confections that form the spiral shapes of the TWISTER product are ice cream and water ice. Ice cream is typically soft when compared to water ice, the contrast between the soft ice cream and hard water ice is a desired feature of this product as it results in sensorial differences to the consumer.

Cold chain distribution, i.e. manufacture, transport and sale of frozen confection products, can affect frozen confection products because the temperature that a product experiences can fluctuate. Cold chain distribution effects are experienced more significantly in geographies that have high ambient temperatures and disjointed supply chains. When a frozen confection product experiences this fluctuation, frozen confections can melt and refreeze. When the frozen confection melts and refreezes, air held within the microstructure of the ice cream is lost. Consequently, the microstructure of the frozen confection is altered, resulting in a compromised structural stability (mechanical strength) that is usually imparted by both the architecture (structure and shape) of the frozen confection product and the composition of the frozen confection. A frozen confection product that has an altered microstructure is typically significantly misshapen and has less mechanical strength. A reduction in mechanical strength results in a frozen confection product that typically has a faster meltdown rate than a product that has been stored at constant temperature of about -18°C. It is postulated that a contributing factor to this loss of structural stability is the loss of insultation usually experienced by frozen confections that are adjacent and in contact with each other.

Stick and bar products require retention of their structural stability in order to remain suitable for consumption as a stick product or bar. A frozen confection product that has been subjected to cold chain temperature fluctuations and that is misshapen and has a faster meltdown rate is, for example, more likely to collapse and fall away from the stick.

Frozen confection compositions include compositions that comprise proteins that originate from a variety of sources. The most common protein sources are dairy or plant products. Consumer trends include products comprising ingredients from other than dairy sources, such as plant sources. Proteins obtained from plant products such as legumes, cereals or nuts, can be present in smaller quantities in frozen confection compositions compared to dairy proteins (3 to 4 wt%) . WO 2017/001266 A1 discloses frozen confection compositions comprising less than 1.5 wt% protein, 25 wt% to 100 wt% of the protein originating from a vegetable source, 2 to 8 wt% oil and/or fat, 10 to 40 wt% sugar solids, 0.05 to 1 wt% emulsifier, and 0 to 1 wt% stabilizer. The aerated frozen confection products prepared from the frozen confection compositions are described as having good texture and good microstructure.

The smaller quantity of plant protein can minimize or eliminate the off-taste present when such proteins are used in frozen confection compositions, such as the compositions disclosed in WO 2017/001266 A1. A reduction in protein content of a frozen confection composition results in compositions that have a lower total solids content and higher water content. Lower total solids content and higher water content results in aerated frozen confection products that are expected to be more susceptible to deterioration, e.g. loss of shape, when the product experiences temperature fluctuations during manufacturing, transport and sale. Frozen confections comprising plant proteins are therefore expected to be less suitable for use in composite products such as the TWISTER product.

WO2011/061121 discloses a water-based coating for frozen confectionery which comprises 75-95% water, 0.5-10% fat, 0.5-5% emulsifier, 0.5-10% gelatinised starch and 0.5-10% denatured protein and a composite frozen confectionery comprising an ice confection core and such coating.

There is a need for frozen confection compositions comprising protein originating from plants that have improved stability when exposed to temperature fluctuations experienced during manufacturing, transport and sale of the products and are therefore suitable for use in composite products, in particular stick and bar products to be sold in geographies with high ambient temperatures and disjointed supply chains.

The present invention provides frozen confection products that have improved structural stability when the products are exposed to temperature fluctuations. Furthermore, the frozen confection products are more structurally stable after exposure to temperature fluctuations in comparison to fresh samples.

### Summary of the Invention

A frozen confection product comprising from two to five frozen confections, wherein from one to five of the frozen confections is an aerated frozen confection comprising from 0.3 wt% to 1.5 wt% protein, wherein from 25 wt% to 100 wt% of the protein is plant protein and from 0 wt% to 75 wt% is dairy protein, wherein the frozen confection product comprises a core and a coating, and from 10% to 100% of the outer surface of the frozen confection product comprises the aerated frozen confection comprising from 0.3 wt% to 1.5 wt% protein, wherein the coating comprises from one to four frozen confections and each frozen confection is in contact with from 10% to 50% of the surface area of the core. Additionally, a process for the preparation of the frozen confection product. The frozen confection products have improved structural stability when the products are exposed to temperature fluctuations.

### Detailed Description of the Invention

Frozen confection product means an item comprising from two to five frozen confections. Typically, the frozen confection product is in a format for consumption. Frozen confection means one frozen confection composition present as a structural element of a frozen confection product i.e. the frozen confections of the frozen confection product are discrete frozen confection structural elements that form one frozen confection product. The frozen confections are positioned adjacent and in contact with each other to form a frozen confection product shape, typically a solid product shape. The frozen confections are positioned adjacent and in contact with each other and may be wrapped about each other, such as a coating and a core, or intertwined. The frozen confections may be shaped in the form of a spiral about a frozen confection core. The frozen confections when shaped in the form of a spiral may form a coating about the core.

Frozen confection products that comprise a core and a coating may comprise frozen confections that have a common longitudinal rotational axis coinciding with the longitudinal rotational axis of the frozen confection product. For example, frozen confections that are wrapped about a frozen confection core typically form a spiral shape about the core. Typically, the spiral shaped frozen confections are positioned adjacent to and in contact with each other resulting in a coating layer of alternating spiral shapes of frozen confection positioned on the curved surface of the (typically) cylindrical core. The spiral shaped frozen confections of the TWISTER product are positioned adjacent to and in contact with each and form a layer of continuous coating of alternating spiral shapes of ice cream and water ice form on the curved surface of the cylindrical core. The spiral shape of a frozen confection may also be known as a helical ribbon, rope stream or rope strand.

Core means part of the frozen confection product wherein the surface area of the core is in contact with a surrounding component, such as a coating. The core of the frozen confection product is typically a cylindrical shape with a longitudinal rotational axis coinciding with the longitudinal rotational axis of the frozen confection product. The core may be any shape, for example, cuboid, rectangular cuboid, spherical, cylindrical tube shape or parallelepiped.

In an embodiment, the frozen confection product comprises frozen confections in the format of a core and coating, wherein all frozen confections of the product have a common longitudinal rotational axis, typically coinciding with the longitudinal rotational axis of the frozen confection product. Examples of such products include TWISTER products (Unilever) and product shapes illustrated in EP 0 044 689 B1. For example, the original TWISTER product comprises three frozen confections: a water ice core and an outer coating comprising two frozen confections, one ice cream and one water ice, positioned about the water ice core.

In an alternative embodiment, the frozen confection product comprises multiple frozen confections wherein the longitudinal rotational axes of the frozen confections coincide with the longitudinal rotational axis of the frozen confection product but are spaced apart from each other. Examples of such products include product shapes illustrated in EP 0 044 689 B1 and WO 2021/140188 A1.

The frozen confection product may be a stick or bar product.

From 10% to 100% of the outer surface of the frozen confection product comprises the aerated frozen confection comprising from 0.3 wt% to 1.5 wt% protein, wherein from 25 wt% to 100 wt% of the protein is plant protein and from 0 wt% to 75 wt% is dairy protein. Preferably the from 15% to 80% of the outer surface of the frozen confection product comprises the aerated frozen confection comprising from 0.3 wt% to 1.5 wt% protein, wherein from 25 wt% to 100 wt% of the protein is plant protein and from 0 wt% to 75 wt% is dairy protein. Preferably from 20% to 70% of the outer surface of the frozen confection product comprises the aerated frozen confection comprising from 0.3 wt% to 1.5 wt% protein, wherein from 25 wt% to 100 wt% of the protein is plant protein and from 0 wt% to 75 wt% is dairy protein.

Outer surface means the surface of the frozen confection product that defines the shape profile of the product. The outer surface is directly exposed to ambient conditions and visible to the consumer before consumption.

In an embodiment of the invention the frozen confection product comprises from two to five frozen confections, the frozen confection product must comprise at least one aerated frozen confection comprising from 0.3 wt% to 1.5 wt% protein, wherein from 25 wt% to 100 wt% of the protein is plant protein and from 0 wt% to 75 wt% is dairy protein. Preferably the frozen confection product comprises from two to four frozen confections, more preferably from three to four frozen confections.

The frozen confection product preferably comprises from one to three, more preferably from one to two aerated frozen confections comprising from 0.3 wt% to 1.5 wt% protein, wherein from 25 wt% to 100 wt% of the protein is plant protein and from 0 wt% to 75 wt% is dairy protein.

The frozen confection product comprises a core and a coating, wherein the coating comprises from one to four frozen confections and from one to four of the frozen confections are an aerated frozen confection comprising from 0.3 wt% to 1.5 wt% protein, wherein from 25 wt% to 100 wt% of the protein is plant protein and from 0 wt% to 75 wt% is dairy protein. Preferably the coating comprises from two to three frozen confections and one of the frozen confections is an aerated frozen confection comprising from 0.3 wt% to 1.5 wt% protein, wherein from 25 wt% to 100 wt% of the protein is plant protein and from 0 wt% to 75 wt% is dairy protein. Preferably the coating comprises from two to three frozen confections and two of the frozen confections are an aerated frozen confection comprising from 0.3 wt% to 1.5 wt% protein, wherein from 25 wt% to 100 wt% of the protein is plant protein and from 0 wt% to 75 wt% is dairy protein.

In an embodiment of the invention the aerated frozen confection comprising from 0.3 wt% to 1.5 wt% protein, wherein from 25 wt% to 100 wt% of the protein is plant protein and from 0 wt% to 75 wt% is dairy protein, is ice cream.

In an embodiment of the invention the coating of the frozen confection product comprises from two to three frozen confections and each frozen confection is selected from the group consisting of ice cream and water ice.

In an embodiment of the invention the coating of the frozen confection product comprises two frozen confections and one frozen confection is an aerated frozen confection comprising from 0.3 wt% to 1.5 wt% protein, wherein from 25 wt% to 100 wt% of the protein is plant protein and from 0 wt% to 75 wt% is dairy protein and is an ice cream, and one frozen confection is water ice.

In an embodiment of the invention the coating of the frozen confection product is in contact with from 10% to 100% of the surface area of the core. Preferably, the coating of the frozen confection product is in contact with from 20% to 90% of the surface area of the core. Preferably, the coating of the frozen confection product is in contact with from 25% to 80% of the surface area of the core.

In an embodiment of the invention the frozen confection of the frozen confection product core comprises water ice. Preferably the frozen confection of the frozen confection product core is water ice.

In an embodiment of the invention the frozen confection product comprises a water ice core and a coating comprising an aerated frozen confection comprising from 0.3 wt% to 1.5 wt% protein, wherein from 25 wt% to 100 wt% of the protein is plant protein and from 0 wt% to 75 wt% is dairy protein which is ice cream, and a water ice.

The coating of the frozen confection product comprises from one to four frozen confections and each frozen confection is in contact with from 10% to 50% of the surface area of the core. Preferably, the frozen confection product comprises from two to four frozen confections and each frozen confection is in contact with from 10% to 50% of the surface area of the core. Preferably, the frozen confection product comprises from two to three frozen confections and each frozen confection is in contact with from 10% to 50% of the surface area of the core.

In an embodiment of the invention the aerated frozen confection comprises: from 0.3 wt% to 1.5 wt% protein, wherein from 25 wt% to 100 wt% of the protein is plant protein and from 0 wt% to 75 wt% is dairy protein; from 2 wt% to 8 wt% fat; from 10 wt% to 40 wt% sugars; 0.05 wt% to 1 wt% emulsifier; and from 0 wt% to 1 wt% stabilizer. Exemplary compositions and methods of preparing the aerated frozen confection compositions are disclosed in WO 2017/001266 A1.

Plant protein means a protein obtainable from a source other than a dairy source. Protein obtainable from a source other than a dairy source may also be known as non-dairy protein. The term 'plant protein' is intended to be synonymous with the term 'non-dairy protein'. Plant protein includes vegetable proteins such as pea protein, chickpea beans, soy protein, cotton seed protein, sunflower seed, lupin protein, oat protein, lentil protein, sesame seed protein, canola protein, broad bean protein, horse bean protein, alfalfa protein, clover protein, rice protein, tapioca protein, potato protein, carob protein and/or corn protein. Examples of plant protein include: soy protein, Supro 120, Solae, protein content 90%; pea protein, Nutralys S85F, Roquette, protein content 80%; and, lupin protein Isolate, Prolupin, protein content 90%. Preferably the plant protein is selected from the group consisting of pea protein, oat protein, soy protein, lupin protein and mixtures thereof. Preferably the plant protein comprises pea protein. Preferably the plant protein is pea protein.

Dairy protein is obtainable from dairy products including: skim milk powder, sodium caseinate, whey protein, whole milk, skim milk, condensed milk, evaporated milk, cream, butter, butterfat, whey, milk solids non-fat. Dairy protein is casein and whey protein. Exemplary dairy proteins and their sources are provided in 'Ice Cream' H. Goff and R.Hartel, Springer 7th Ed, 2013, pages 60-65.

Preferably, the aerated frozen confection comprises from 0.3 wt% to 1.0 wt% protein, wherein from 25 wt% to 100 wt% of the protein is plant protein and from 0 wt% to 75 wt% is dairy protein; from 2 wt% to 5 wt% fat; from 10 wt% to 20 wt% sweetener; 0.1 wt% to 0.5 wt% emulsifier; and from 0 wt% to 0.5 wt% stabilizer.

Preferably, the aerated frozen confection comprises from 0.5 wt% to 0.8 wt% protein, wherein from 25 wt% to 100 wt% of the protein is plant protein and from 0 wt% to 75 wt% is dairy protein; from 2 wt% to 5 wt% fat; from 10 wt% to 20 wt% sweetener; 0.1 wt% to 0.5 wt% emulsifier; and from 0 wt% to 0.5 wt% stabilizer.

Preferably, the frozen confection comprises from 0.3 to 1.5 wt% plant protein, preferably from 0.5 to 1 wt % plant protein, more preferably from 0.5 to 0.8 wt% plant protein.

The pH of the aerated frozen confection composition comprising from 0.3 wt% to 1.0 wt% protein is typically between 5 and 8.5, preferably between 5.5 and 8.5, more preferably between 5.5 and 8.

The frozen confection comprising from 0.3 wt% to 1.5 wt% protein typically comprises sugars. Sugars means the total sugar content of the frozen confection and comprises saccharides, corn syrups and sugar alcohols.

The frozen confection preferably comprises from 15 wt% to 40 wt% sugars, from 15 wt% to 35 wt% sugars, from 15 wt% to 34 wt% sugars, preferably from 15 wt% to 30 wt% sugars.

Saccharides is selected from the group consisting of monosaccharides, disaccharides, oligosaccharides, and mixtures thereof. Saccharides includes: sucrose, fructose, glucose maltose, galactose, dextrose, and lactose. Saccharides is selected from the group consisting of sucrose, fructose, glucose maltose, galactose, dextrose, lactose and mixtures thereof. Examples of sucrose includes: Sucrose, Tate and Lyle (London, UK).

Corn syrups comprise corn syrups that are dextrose equivalent (DE) of 20 to 70, preferably 35 to 65 DE. Corn syrups include: Dextrose monohydrate: C-Pharm Dex 02010, Cargill, Glucose syrup 28DE: spray dried C-Dry GL 01924, Cargill, and Glucose-Fructose Syrup, 63DE, 78% dry matter (LF9), Cargill.

Sugar alcohols include erythritol, sorbitol, maltitol, lactitol, glycerol, and xylitol. Sugar alcohols are selected from the group consisting of erythritol, sorbitol, maltitol, lactitol, glycerol, xylitol and mixtures thereof. Preferably the sugar alcohol is selected from the group consisting of maltitol, erythritol and mixtures thereof.

The frozen confection comprising from 0.3 wt% to 1.5 wt% protein preferably comprises from 0 wt% to 10 wt% sugar alcohols, from 0.5 wt% to 8 wt% sugar alcohols, or even from 1 wt% to 6 wt% sugar alcohols.

Prior to use, the sugars may be in a crystalline, powder or syrup form.

The frozen confection comprising from 0.3 wt% to 1.5 wt% protein may comprise soluble fibres such as inulin, polydextrose and/or oligofructosaccharides.

The frozen confection comprising from 0.3 wt% to 1.5 wt% protein may comprise low- or non-caloric sweeteners. Low- or non-caloric sweeteners may also be known as intense sweeteners. Any low- or non-caloric sweeteners well known in the art may be used, such as aspartame, saccharine, Alitame (obtainable from Pfizer), acesulfame K (obtainable from Hoechst), cyclamates, neotame, sucralose and mixtures thereof. Examples of low- or non-caloric sweeteners include Rebaudioside A [also known as Stevia (Cargill Inc)]; sucralose; acesulfame potassium (Nutrinova). Exemplary low- or non-caloric sweeteners are disclosed in 'Ice Cream' 5th Ed., Marshall and Arbuckle, 1996, Chapman & Hall, New York. N.Y., in particular chapter 5.

The frozen confection comprising from 0.3 wt% to 1.5 wt% protein preferably comprises from 0 wt% to 1 wt% low- or non-caloric sweetener, from 0.005 wt% to 1 wt% low- or non-caloric sweetener, from 0.007 wt% to 0.73 wt% low- or non-caloric sweetener, from 0.01 wt% to 0.15 wt% low- or non-caloric sweetener, from 0.01 wt% to 0.05 wt% low- or non-caloric sweetener, or even from 0 wt% to 0.05 wt% low- or non-caloric sweetener. Preferably the frozen confection comprises 0 wt% low- or non-caloric sweetener.

The frozen confection comprising from 0.3 wt% to 1.5 wt% protein preferably comprises a bulking agent. Examples of bulking agents include polydextrose (Litesse, Danisco), soluble gluco fibre such as Promitor (Tate & Lyle), fructose oligosaccharides such as inulin, and maltodextrin. The frozen confection comprising from 0.3 wt% to 1.5 wt% protein preferably comprises from 0 wt% to 20 wt% bulking agent, or from 13 wt% to 16 wt% bulking agent.

Fat means fats typically used for frozen confections as described in 'The Science of Ice Cream', C. Clarke, RSC 2004, for example: chapter 3; and 'Ice Cream' 5^{th} Ed., Marshall and Arbuckle, 1996, Chapman & Hall, New York. N.Y., in particular chapter 5.

Fats include butter oil, coconut oil, palm oil, cocoa butter, illipe, shea, palm, palm kernel, and sal, soybean oil, corn oil, peanut oil, safflower oil, flaxseed oil, cottonseed oil, rapeseed oil, canola oil, olive oil, sunflower oil, high oleic sunflower oil and mixtures thereof. Preferably the fat is selected from the group consisting of butter oil, coconut oil, soybean oil, corn oil, peanut oil, safflower oil, flaxseed oil, cottonseed oil, rapeseed oil, canola oil, olive oil, sunflower oil, high oleic sunflower oil and mixtures thereof. More preferably the fat is selected from the group consisting of butter oil, coconut oil and mixtures thereof.

The frozen confection comprising from 0.3 wt% to 1.5 wt% protein preferably comprises from 1 wt% to 8 wt% fat, more preferably from 1 wt% to 6 wt % fat, or even from 2 wt% to 5 wt% fat.

Emulsifier means mono-di-glycerides of saturated fatty acids, mono-di-glycerides of partially unsaturated fatty acids, tween, egg yolk, fractions of egg yolk, and lecithin. Examples of emulsifiers include HP60: Mono-di-glycerides of saturated fatty acids; Grindsted Mono-Di-Glycerides HP60, (DuPont Danisco) made from edible, fully hydrogenated palm oil, manufacturers specifications: total monoglyceride 50-63%; iodine value 3; and PS222: Mono-di-glycerides of partially saturated fatty acids: Grindsted Mono-Di-Glycerides PS222, (DuPont Danisco), made from edible, refined palm based fats and/or fully hardened palm based fat, manufacturer's specifications: total monoglyceride 64-88%; iodine value <30. Preferably, the emulsifier is selected from the group consisting of saturated fatty acids of mono-di-glycerides, unsaturated fatty acids of mono-di-glycerides and mixtures thereof.

The frozen confection comprising from 0.3 wt% to 1.5 wt% protein preferably comprises from 0.05 wt% to 1 wt% emulsifiers, more preferably from 0.1 wt% and 0.5 wt% emulsifiers.

Stabilizer means locust bean gum, tara gum, carrageenan, guar gum, sodium alginate, pectins, xanthan gum, gelatin, microcrystalline cellulose, citrus fibers and mixtures thereof. Examples of stabilizers include: Locust Bean Gum (LBG), LBG246 (GAX-00008), ex DuPont; Guar gum: Grindsted Guar 250, ex DuPont Danisco; Carrageenan L100: kappa-carrageenan Genulacta L100, ex CP Kelco. Preferably stabilizers are selected from the group consisting of Locust Bean Gum, Guar gum, tara gum, carrageenan, pectin and mixtures thereof.

The frozen confection comprising from 0.3 wt% to 1.5 wt% protein preferably comprises from 0 wt% to 1 wt% stabilizer, from 0.02 wt% to 0.6 wt % stabilizer, from 0.05 wt% to 0.6 wt% stabilizer, or even from 0.1 wt% and 0.4 wt% stabilizer.

The frozen confection comprising from 0.3 wt% to 1.5 wt% protein preferably comprises flavorings. Examples of flavourings include cocoa, pure vanilla, artificial flavor, such as vanillin, ethyl vanillin, chocolate, extracts, spices and the like.

The frozen confection comprising from 0.3 wt% to 1.5 wt% protein preferably comprises from 40 wt% to 90 wt% water, from 50 wt% to 75 wt% water, or even from 60 wt% to 75 wt% water.

Frozen confections may be prepared, for example, according to methods provided in the 'The Science of Ice Cream', C. Clarke, RSC 2004, for example: chapters 3, 4 and 8; and 'Ice Cream' 5th Ed., Marshall and Arbuckle, 1996, Chapman & Hall, New York. N.Y., in particular chapters 9 to 14, and 19. An exemplary preparation of a frozen confection comprising plant protein is disclosed in WO 2017/001266 A1.

The frozen confection product may comprise one or more frozen confections and may further comprise any additional ingredient. For example, the frozen confection product may comprise one or more frozen confection sauces, one or more frozen confection coatings, one or more inclusions, for example, fruit pieces, chocolate pieces, confectionary, nuts and bakery goods (wafer, biscuit and cake pieces). Exemplary frozen confection sauces, coatings and inclusions, are described in 'The Science of Ice Cream', C. Clarke, RSC 2004, page 57-59.

Frozen confections may be aerated. Aerated means that the frozen confection comprises air. The term "aerated" means that gas has been intentionally incorporated into the composition, for example by mechanical means. The gas can be any gas, but is preferably, particularly in the context of food products, a food-grade gas such as air, nitrogen, nitrous oxide, or carbon dioxide. The extent of aeration is defined in terms of "overrun". The amount of air present is defined as overrun and is defined and calculated as disclosed in: 'The Science of Ice Cream', C. Clarke, RSC 2004, chapter 4. The amount of overrun present in the product will vary depending on the desired product characteristics. The overrun is from 0% to 250%; preferably from 10% to 200%. For aerated frozen confections, wherein the frozen confection is ice cream, the overrun is from 0% to 250%; preferably from 10% to 200% from 50% to 150%.

The frozen confection product comprises frozen confections selected from the same or different frozen confections, i.e. the frozen confection product may comprise one or more frozen confection compositions. The term 'frozen confection' is intended to be equivalent to the term 'frozen confection composition'.

Frozen confection means a sweet-tasting fabricated foodstuff intended for consumption in the frozen state (i.e. under conditions wherein the temperature of the foodstuff is less than 0°C). The frozen confection is selected from the group consisting of water ice, milk-ice, ice cream, frozen yoghurt, frozen custard, sorbet, gelato and mixtures thereof. Ice cream may be selected from the group consisting of dairy ice cream, non-dairy ice cream and mixtures thereof. Preferably, the frozen confection is selected from the group consisting of ice cream and water ice.

In an embodiment of the invention the frozen confection product comprises three frozen confections.

An embodiment of the invention is a process for the preparation of a frozen confection product comprising from two to five frozen confections, wherein from one to five of the frozen confections is an aerated frozen confection comprising from 0.3 wt% to 1.5 wt% protein and wherein the outer surface of the frozen confection product comprises the aerated frozen confection comprising from 0.3 wt% to 1.5 wt% protein.

A typical process for preparation of frozen confection products according to the present invention is described in EP 0 044 689 B1. Exemplary apparatus is described in EP 0 044 689 B1; in particular the nozzle of figure 1.

A further embodiment of the invention is a process for preparing a frozen confection product comprising the steps of:
a Preparing one or more frozen confection compositions,
b Extruding the frozen confections of step a.
c Cooling the extruded product of step b.

A stick or may be inserted into the product of step b. between step b. and step c.

The process may further comprise step d., wherein the frozen confection product may be hardened.

A further embodiment of the invention is the use of an aerated frozen confection comprising from 0.3 wt% to 1.5 wt% protein as a coating for a frozen confection product.

A further embodiment of the invention is use of an aerated frozen confection comprising from 0.3 wt% to 1.5 wt% protein as a coating for a frozen confection stick product.

A further embodiment of the invention is use of an aerated frozen confection comprising from 0.3 wt% to 1.5 wt% protein as a coating for a frozen confection bar product.

### Figures

Figure 1: Example 1: Freshly prepared frozen confection after 120 minutes of the meltdown test.
Figure 2: Example 2: Temperature cycled frozen confection after 120 minutes of the meltdown test.
Figure 3: Example 3: Temperature cycled frozen confection product at 27 mins during meltdown and drop test of general method C.

### Examples

### General Methods:

### A. Meltdown Test

Tests were performed on a stainless steel wire mesh grid having a size of 25×25 cm, with 3 mm diameter squares, 1 mm thick wire. Underneath the grid was a collecting vessel (1 litre ice cream tub) and balances for weighing the material collected in the vessel. The balances were connected to a data logging system to record the mass collected. The grids were placed in a meltdown cabinet set at a constant temperature environment of 22°C. For each example melting tests were performed in duplicate. Before placement in the cabinet the ice cream samples were equilibrated in a freezer at -25°C., and then weighed on a zeroed balance. The ice cream was taken out of the 200 ml Joni pot and weighed. The Joni pot size was 100 x 70 x 35 mm [WxLxH]. The weight of the ice cream was recorded. They were then placed on the mesh grid and were arranged randomly over the available positions in the meltdown cabinet. Once all samples were in place, the data logging system measured the amount of collected material every minute over a 120 minute time period.

### B. Temperature cycling/Heat Shock Test:

An ice cream block corresponding to a Join pot size was 100 x 70 x 35 mm [WxLxH] is removed from storage at -25°C and subjected to -20°C and -10°C for 12 hr periods for 14 days. The shape retention and amount of melted frozen confection was measured over time.

Temperature cycling is designed to accelerate some of the key deterioration mechanisms for frozen confections. The extent of product deterioration after 2 weeks mimics the level of deterioration seen in a product passing through a typical cold chain.

### C. Meltdown and Drop Test:

Frozen confections products (60 g) were stored at -18°C prior to the test. A frozen confection product was held elevated by a retort stand at 23.5°C degrees. The frozen confection product was held by the stick in a horizontal position (i.e. the longitudinal axis of the frozen confection product was parallel to the bench top). The amount of meltdown over time and the time for the frozen confection to fall away from the stick was measured.

### Examples 1 to 2:

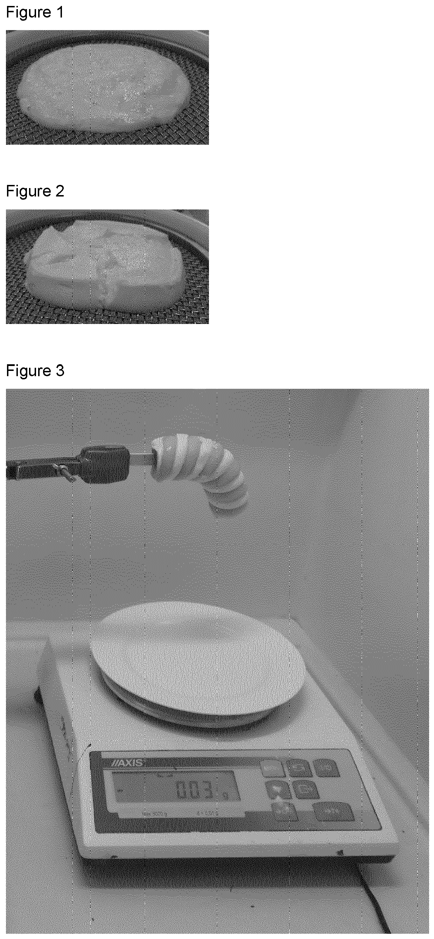

Aerated frozen confections corresponding to the compositions of WO 2017/001266 A1 were prepared. One sample (Example 1) was subjected to the meltdown test (general method A). A second sample (Example 2) was subjected to temperature cycling conditions (general method B) followed by the meltdown test (general method A). The images shown in Figures 1 to 2 correspond to the shape of the frozen confection after 120 mins of the meltdown test.

All examples 1 and 2 lost less than 10% mass after 40 mins and less than 30% mass after 120 mins.

Frozen confections comprising from 0.3 wt% to 1.5 wt% protein, wherein 25 wt% to 100 wt% of the protein is plant protein, from 2 wt% to 8 wt% fat, from 10 wt% to 40 wt% sugars, from 0.05 wt% to 1 wt% emulsifier, and from 0 wt% to 1 wt% stabilizer have a significantly improved shape stability after exposure to temperature cycling when compared to freshly prepared samples.

Examples 1 to 2 demonstrate the significantly improved shape stability of frozen confections that have been exposed to temperature cycling. The improved shape stability can be extrapolated to correspond to improved resilience of frozen confection products that experience temperature cycling conditions during manufacturing, transport and sale (i.e. cold chain temperature fluctuations). It is postulated that the improved shape stability enables the frozen confection to retain the insulating property with respect to adjacent frozen confections.

Consequently, it is expected that frozen confection products comprising corresponding frozen confections will be resilient to temperature fluctuations experienced during manufacturing, transport and sale (i.e.: cold chain temperature fluctuations) and will remain suitable for consumption as a stick product or bar.

### Example 3:

A frozen confection product (60 g) comprising three frozen confections, wherein from one of the frozen confections is an aerated frozen confection comprising from 0.3 wt% to 1.5 wt% protein and wherein the outer surface of the frozen confection product comprises the aerated frozen confection comprising from 0.3 wt% to 1.5 wt% protein was prepared.

The frozen confection product was subjected to the temperature cycling test of general method B, with the variation that the cycling duration was 5 days.

The frozen confection product was subjected to the meltdown and drop test (general method C). The frozen confection fell away from the stick after 27 mins. No meltdown (0.0005 wt%) was observed to have been lost from the frozen confection product during the 27 mins before the frozen confection fell away from the stick.

Example 3 demonstrates the significantly improved shape stability of the frozen confections and frozen confection product after exposure to temperature cycling conditions that correspond to fluctuation of temperature during manufacturing, transport and sale (i.e.: cold chain temperature fluctuations). Furthermore, the frozen confections and frozen confection products demonstrate significantly reduced meltdown. Consequently, the frozen confection product has improved resilience to temperature fluctuations experienced during manufacturing, transport and sale (i.e.: cold chain temperature fluctuations) and remain suitable for consumption as a stick product or bar.

## Claims

1. A frozen confection product comprising from two to five frozen confections, wherein from one to five of the frozen confections is an aerated frozen confection comprising from 0.3 wt% to 1.5 wt% protein, wherein from 25 wt% to 100 wt% of the protein is plant protein and from 0 wt% to 75 wt% is dairy protein, wherein the frozen confection product comprises a core and a coating, and from 10% to 100% of the outer surface of the frozen confection product comprises the aerated frozen confection comprising from 0.3 wt% to 1.5 wt% protein, wherein the coating comprises from one to four frozen confections and each frozen confection is in contact with from 10% to 50% of the surface area of the core.

2. A frozen confection product according to claim 1, wherein from 15% to 80% of the outer surface of the frozen confection product comprises the aerated frozen confection comprising from 0.3 wt% to 1.5 wt% protein.

3. A frozen confection product according to claim 1 or 2, wherein the frozen confection product comprises a core and a coating, wherein the coating comprises from two to three frozen confections, at least one of which is the aerated frozen confection comprising from 0.3 wt% to 1.5 wt% protein.

4. A frozen confection product according to any one of claims 1 to 3, wherein the coating is in contact with from 20% to 90% of the surface area of the core.

5. A frozen confection product according to any one of claims 1 to 4, wherein the coating comprises from two to four frozen confections and each frozen confection is in contact with from 10% to 50% of the surface area of the core.

6. A frozen confection product according to any one of claims 1 to 5, wherein the coating comprises frozen confection arranged in a spiral shape about the core and the rotational longitudinal axes of the frozen confection and core are coincidental.

7. A frozen confection product according to any one of claims 1 to 6, wherein the coating is frozen confection selected from the group consisting of ice cream and water ice.

8. A frozen confection product according to any one of claims 1 to 7, wherein the core is water ice.

9. A frozen confection product according to any one of claims 1 to 8, wherein the aerated frozen confection comprises 2 wt% to 8 wt% fat, 10 wt% to 40 wt % sugars, 0.05 wt% to 1 wt% emulsifier, and 0 wt% to 1 wt% stabilizer.

10. A frozen confection product according to any one of claims 1 to 9, wherein the plant protein is selected from the group consisting of pea protein, oat protein, soy protein, lupin protein and mixtures thereof.

11. A frozen confection product according to any one of claims 1 to 10, wherein the aerated frozen confection comprises from 15 wt% to 30 wt% sugars.

12. A frozen confection product according to any one of claims 1 to 11, wherein the aerated frozen confection comprises from 60 wt% to 75 wt% water.

13. A process for the preparation of the frozen confection product according to any one of claims 1 to 12, comprising the steps of:
a Preparing one or more frozen confection compositions,
b Extruding the frozen confections of step a.
c Freezing the extruded product of step b.

14. A process according to claim 13, wherein a stick is inserted into the product of step b. between step b. and step c.

## Patentansprüche

1. Gefrorenes Konfektprodukt, umfassend zwei bis fünf gefrorene Konfekte, wobei eines bis fünf der gefrorenen Konfekte ein belüftetes gefrorenes Konfekt ist/sind, umfassend von 0,3 bis 1,5 Gew.-% Protein, wobei 25 bis 100 Gew.-% des Proteins pflanzliches Protein und 0 bis 75 Gew.-% Milchprotein sind, wobei das gefrorene Konfektprodukt einen Kern und eine Beschichtung umfasst und 10 bis 100% der äußeren Oberfläche des gefrorenen Konfektprodukts das belüftete gefrorene Konfekt umfassen, das 0,3 bis 1,5 Gew.-% Protein umfasst, wobei die Beschichtung ein bis vier gefrorene Konfekte umfasst und jedes gefrorene Konfekt mit 10 bis 50% der Oberfläche des Kerns in Kontakt steht.

2. Gefrorenes Konfektprodukt nach Anspruch 1, wobei 15 bis 80% der äußeren Oberfläche des gefrorenen Konfektprodukts das belüftete gefrorene Konfekt umfassen, umfassend 0,3 bis 1,5 Gew.-% Protein.

3. Gefrorenes Konfektprodukt nach Anspruch 1 oder 2, wobei das gefrorene Konfektprodukt einen Kern und eine Beschichtung umfasst, wobei die Beschichtung zwei bis drei gefrorene Konfekte umfasst, von denen mindestens eines das belüftete gefrorene Konfekt ist, umfassend 0,3 bis 1,5 Gew.-% Protein.

4. Gefrorenes Konfektprodukt nach irgendeinem der Ansprüche 1 bis 3, wobei die Beschichtung mit 20 bis 90% der Oberfläche des Kerns in Kontakt steht.

5. Gefrorenes Konfektprodukt nach irgendeinem der Ansprüche 1 bis 4, wobei die Beschichtung zwei bis vier gefrorene Konfekte umfasst und jedes gefrorene Konfekt mit 10 bis 50% der Oberfläche des Kerns in Kontakt steht.

6. Gefrorenes Konfektprodukt nach irgendeinem der Ansprüche 1 bis 5, wobei die Beschichtung gefrorenes Konfekt umfasst, das spiralförmig um den Kern angeordnet ist, und die Rotationslängsachsen des gefrorenen Konfekts und des Kerns übereinstimmen.

7. Gefrorenes Konfektprodukt nach irgendeinem der Ansprüche 1 bis 6, wobei die Beschichtung gefrorenes Konfekt ist, ausgewählt aus der Gruppe, bestehend aus Eiscreme und Wassereis.

8. Gefrorenes Konfektprodukt nach irgendeinem der Ansprüche 1 bis 7, wobei der Kern Wassereis ist.

9. Gefrorenes Konfektprodukt nach irgendeinem der Ansprüche 1 bis 8, wobei das belüftete gefrorene Konfekt 2 bis 8 Gew.-% Fett, 10 bis 40 Gew.-% Zucker, 0,05 bis 1 Gew.-% Emulgator und 0 bis 1 Gew.-% Stabilisator umfasst.

10. Gefrorenes Konfektprodukt nach irgendeinem der Ansprüche 1 bis 9, wobei das pflanzliche Protein aus der Gruppe ausgewählt ist, die aus Erbsenprotein, Haferprotein, Sojaprotein, Lupinenprotein und Mischungen davon besteht.

11. Gefrorenes Konfektprodukt nach irgendeinem der Ansprüche 1 bis 10, wobei das belüftete gefrorene Konfekt 15 bis 30 Gew.-% Zucker umfasst.

12. Gefrorenes Konfektprodukt nach irgendeinem der Ansprüche 1 bis 11, wobei das belüftete gefrorene Konfektprodukt 60 bis 75 Gew.-% Wasser umfasst.

13. Verfahren zur Herstellung des gefrorenen Konfektprodukts nach irgendeinem der Ansprüche 1 bis 12, umfassend die Schritte:
a Herstellen einer oder mehrerer gefrorener Konfektzusammensetzungen,
b Extrudieren der gefrorenen Konfekte aus Schritt a,
c Einfrieren des extrudierten Produkts aus Schritt b.

14. Verfahren nach Anspruch 13, wobei zwischen Schritt b. und Schritt c. ein Stab in das Produkt aus Schritt b. eingeführt wird.

## Revendications

1. Produit de confiserie congelé comprenant deux à cinq confiseries congelées, dans lequel une à cinq des confiseries congelées sont des confiseries congelées aérées comprenant de 0,3 % en poids à 1,5 % en poids de protéines, dans lequel de 25 % en poids à 100 % en poids des protéines sont des protéines végétales et de 0 % en poids à 75 % en poids sont des protéines de lait, lequel produit de confiserie congelé comprend un cœur et un enrobage, et dans lequel de 10 % à 100 % de la surface extérieure du produit de confiserie congelé comprennent la confiserie congelée aérée comprenant de 0,3 % en poids à 1,5 % en poids de protéines, dans lequel l'enrobage comprend d'une à quatre confiseries congelées et chaque confiserie congelée est en contact avec de 10 % à 50 % de la superficie du cœur.

2. Produit de confiserie congelé selon la revendication 1, dans lequel de 15 % à 80 % de la surface extérieure du produit de confiserie congelé comprennent la confiserie congelée aérée comprenant de 0,3 % en poids à 1,5 % en poids de protéines.

3. Produit de confiserie congelé selon la revendication 1 ou 2, lequel produit de confiserie congelé comprend un cœur et un enrobage, dans lequel l'enrobage comprend de deux à trois confiseries congelées, dont au moins une est la confiserie congelée aérée comprenant de 0,3 % en poids à 1,5 % en poids de protéine.

4. Produit de confiserie congelé selon l'une quelconque des revendications 1 à 3, dans lequel l'enrobage est en contact avec de 20 % à 90 % de la superficie du cœur.

5. Produit de confiserie congelé selon l'une quelconque des revendications 1 à 4, dans lequel l'enrobage comprend de deux à quatre confiseries congelées et chaque confiserie congelée est en contact avec de 10 % à 50 % de la superficie du cœur.

6. Produit de confiserie congelé selon l'une quelconque des revendications 1 à 5, dans lequel l'enrobage comprend une confiserie congelée disposée sous la forme d'une spirale autour du cœur et les axes longitudinaux rotationnels de la confiserie congelée et du cœur coïncident.

7. Produit de confiserie congelé selon l'une quelconque des revendications 1 à 6, dans lequel l'enrobage est une confiserie congelée choisie dans le groupe constitué par une crème glacée et une glace à l'eau.

8. Produit de confiserie congelé selon l'une quelconque des revendications 1 à 7, dans lequel le cœur est une glace à l'eau.

9. Produit de confiserie congelé selon l'une quelconque des revendications 1 à 8, dans lequel la confiserie congelée aérée comprend 2 % en poids à 8 % en poids de matières grasses, 10 % en poids à 40 % en poids de sucres, 0,05 % en poids à 1 % en poids d'émulsifiant, et 0 % en poids à 1 % en poids de stabilisant.

10. Produit de confiserie congelé selon l'une quelconque des revendications 1 à 9, dans lequel les protéines végétales sont choisies dans le groupe constitué par les protéines de pois, les protéines d'avoine, les protéines de soja, les protéines de lupin et leurs mélanges.

11. Produit de confiserie congelé selon l'une quelconque des revendications 1 à 10, dans lequel la confiserie congelée aérée comprend de 15 % en poids à 30 % en poids de sucres.

12. Produit de confiserie congelé selon l'une quelconque des revendications 1 à 11, dans lequel la confiserie congelée aérée comprend de 60 % en poids à 75 % en poids d'eau.

13. Procédé pour la préparation du produit de confiserie congelé de l'une quelconque des revendications 1 à 12, comprenant les étapes de :
a. préparation d'une ou plusieurs compositions de confiserie congelée,
b. extrusion des confiseries congelées de l'étape a,
c. congélation du produit extrudé de l'étape b.

14. Procédé selon la revendication 13, dans lequel un bâtonnet est inséré dans le produit de l'étape b entre l'étape b et l'étape c.
